# EUROPÄISCHE PATENTSCHRIFT

(11) **EP 1 764 062 B1**
(45) Veröffentlichungstag und Bekanntmachung des Hinweises auf die Patenterteilung: **08.04.2015**
(21) Anmeldenummer: 06019128.5
(22) Anmeldetag: 13.09.2006
(51) Int. Cl.: A61C 13/20

(54) **Formkörper aus einer Dentallegierung zur Herstellung von dentalen Teilen**
Shaped body made of dental alloy for making a dental restoration
Forme en alliage dentaire pour la fabrication de restauration dentaire

(30) Priorität: 20.09.2005 DE 102005045698
(43) Veröffentlichungstag der Anmeldung: 21.03.2007
(73) Patentinhaber: DENTAURUM GmbH & Co. KG, 75228 Ispringen (DE)
(72) Erfinder: Sernetz, Friedrich, Dr., 75173 Pforzheim (DE); Lindigkeit, Jürgen, Dr., 75203 Königsbach-Stein (DE)
(74) Vertreter: Hoeger, Stellrecht & Partner Patentanwälte

(56) Entgegenhaltungen:
- EP-A1- 0 294 784
- EP-A1- 1 555 332
- EP-A2- 1 240 877
- WO-A-02/07911
- WO-A2-2005/039663
- DE-A1- 19 714 178
- DE-A1- 19 819 715
- DE-A1-102005 062 837
- US-A- 5 021 085
- US-B1- 6 379 593
- KUGUSHIN A A ET AL: "Nickel -based alloy for prodn. of dental prosthesis with ceramic coating - contains chromium , molybdenum , silicon , manganese , iron , carbon , and additionally cerium", WPI / THOMSON, XP002443183,

## Beschreibung

Die Erfindung betrifft ein Verfahren zur Herstellung eines Formkörpers, der aus einer Dentallegierung besteht und materialabtragend bearbeitbar ist zur Herstellung von dentalen Teilen wie zum Beispiel Kronen und Brücken bzw. entsprechenden Gerüsten.

Dentallegierungen werden üblicherweise im zahntechnischen Labor mit Hilfe des Wachsausschmelzverfahrens zu dentalen Teilen, insbesondere zu Zahnersatzteilen, wie beispielsweise Kronen, Brücken bzw. entsprechenden Gerüsten, verarbeitet. Dieses gießtechnische Verfahren erlaubt beispielsweise nach Abdrucknahme im Mund des Patienten eine entsprechende Modellation einer Krone oder Brücke durch den Zahntechniker und die Wiederherstellung der betreffenden Zahnkrone oder des Zahngerüstes. Bei diesem Verfahren können eine große Anzahl edelmetallhaltiger oder edelmetallfreier Dentallegierungen zum Einsatz kommen. Das nach diesem Verfahren hergestellte dentale Teil weist ein metallurgisches Gefüge sowie mechanische Eigenschaften auf, die dem Gusszustand eines sogenannten Feingusses entsprechen. Die Herstellung ist hochgradig handwerklich manuell und damit kostenintensiv. Außerdem sind entsprechende Gussgefüge grobkörnig und weisen häufig typische Gussfehler auf wie Lunker, Porositäten, Seigerungen und Inhomogenitäten, die zu schlechteren mechanischen Eigenschaften gegenüber feinkörnigen Gefügestrukturen führen und eine erhöhte Korrosionsanfälligkeit und damit eine reduzierte Körperverträglichkeit aufweisen können.

In den letzten Jahren hat die Verwendung sogenannter CAD/CAM-Techniken (computer-aided design, CAD bzw. computer-aided manufacturing, CAM) zur Herstellung von dentalen Teilen wie beispielsweise Kronen und Brücken auch bei der Einzelanfertigung von Patientenarbeiten im Dentallabor zugenommen. Bekannt ist hierbei das sogenannte CEREC-Verfahren, veröffentlicht in "Quintessenz", 3/1987, Seiten 457 bis 470, bei dem ein aus Dentalkeramik bestehender Formkörper nach Eingabe entsprechender Scan-Daten der Zahnsituation auf einem mehrachsigen Bearbeitungszentrum zu einer dentalen Restauration geschliffen wird. Die erforderlichen Daten zur Steuerung des Bearbeitungszentrums werden durch Scannen eines Zahnmodells oder des im Mund befindlichen Zahnes und Überprüfung durch den Zahnarzt oder Zahntechniker gewonnen.

Zunehmend werden mittels derartiger CAD/CAM-Techniken auch metallische dentale Teile wie Kronen und Brücken durch materialabtragende Bearbeitung eines Formkörpers aus einer Dentallegierung, insbesondere durch Fräsen, hergestellt. Die Formkörper sind in der Regel zylinder- oder quaderförmig und werden üblicherweise im Guss-Verfahren oder durch umformende Verfahren wie Schmieden, Pressen und/oder Walzen hergestellt. Im Gussverfahren hergestellte Formkörper aus einer Dentallegierung sind meist grobkörnig und selbst bei Anwendung eines Feingussverfahrens und sogenannter Kornfeiner, wie sie beispielsweise in der DE 38 21 204 C2 beschrieben werden, nicht so feinkörnig herstellbar wie direkt im zahntechnischen Verfahren gegossene, eher kleinere dentale Teile. Insbesondere bei edelmetallfreien CoCr- und NiCr-Dentallegierungen führt die für diese Legierungen typische grob-dendritische Gussstruktur zur schlechteren mechanischen Eigenschaften eines aus einem solchen Formkörper herausgearbeiteten dentalen Teiles als dies bei einem zahntechnischen direkten Guss der Fall ist. Durch Umformen wie Pressen, Schmieden und/oder Walzen lässt sich zwar das primäre grobe Gussgefüge in eine feinkörnige Mikrostruktur mit verbesserten mechanischen Eigenschaften umwandeln, das Herstellverfahren verteuert sich dadurch aber wesentlich. Hinzu kommt, dass die umformtechnische Bearbeitung nicht bei allen im Dentallabor üblicherweise eingesetzten Dentallegierungen möglich ist, da die Umformbarkeitseigenschaften stark von der chemischen Zusammensetzung der Dentallegierung abhängen und auch Legierungselemente mit geringem Anteil sowie geringe Verunreinigungen einen großen Einfluss haben können. So werden zum Beispiel bei orthopädischen Implantat-Schmiedelegierungen beträchtliche Anteile von Nickel zur Erhöhung der Umformbarkeit von CoCr-Legierungen hinzugefügt, obwohl die allergenisierende Wirkung dieses Elementes bekannt ist.

Die Herstellung metallischer Formkörper aus Dentallegierungen für CAD/CAM-Techniken mittels eines pulvermetallurgischen statt eines Gieß- oder Umformverfahrens wird in der DE 103 42 231 A1 beschrieben. Bei dem dort beschriebenen Formkörper wird Wert darauf gelegt, dass der Formkörper offenporig und nicht dicht gesintert ist, um leichter bearbeitet werden zu können. Erst nach der Fertigstellung der Endform werden in einem weiteren Arbeitsschritt mittels eines Infiltrationsverfahrens die offenen Poren des Formkörpers mit einer zweiten Legierung geschlossen. Der Einsatz eines metallischen Verbundwerkstoffes bei der dentalen Anwendung ist jedoch wegen der Korrosionsanfälligkeit des Werkstoffverbundes zweier Legierungen sehr nachteilig.

Aus der DE 198 19 715 A1 ist ein Verfahren zur Herstellung von Dentalgusserzeugnissen und zur Herstellung eines Werkstoffes für Dentalerzeugnisse bekannt, bei dem man feine Partikel eines Werkstoffes zumindest anschmilzt und diese Partikel dann anschließend kompaktiert, so dass ein gesinterter Werkstoff (Halbzeug) entsteht. Der gesinterte Werkstoff kann als Gusswerkstoff für die Herstellung von Dentalgusserzeugnissen verwendet werden.

Aus der DE 197 14 178 A1 ist ein Verfahren zur Herstellung eines mehrfarbigen Formkörpers für die Weiterverarbeitung zu einer Zahnrestauration bekannt. Das Verfahren ist für keramische Formkörper und für Kunststoffformkörper anwendbar. Hierbei werden mindestens zwei unterschiedlich gefärbte Ausgangsmaterialien in eine Pressmatrize gefüllt und zum Formkörper verpresst. Der Formkörper kann im Wege des Trockenpressens hergestellt werden, wobei die Ausgangsmaterialien während des Trockenpressens mit Temperatur beaufschlagt werden. Bei keramischen Ausgangsmaterialien kommt die Heißisostatik und bei Kunststoffen das Heißpressen mit erhitzten Werkzeugen in Betracht.

Aus der EP-A2-1 240 877 ist ein Verfahren zur Herstellung einer Vorform für Dentalerzeugnisse bekannt, wobei ein pulverförmiger Ausgangsstoff in einem Formwerkzeug mechanisch verdichtet und mindestens einem Stromimpuls ausgesetzt und anschließend dem Formwerkzeug entnommen und einer Wärmebehandlung unterzogen wird.

Aus der WO 02/07911 A ist ein Verfahren zur Herstellung eines Verbundkörpers bekannt, bei dem ein in eine Form eingefülltes Pulver uniaxial verpresst wird durch Einwirkung von Schlagenergie. Der verpresste Formkörper kann anschließend nachbearbeitet werden, beispielsweise durch heißisostatisches Pressen.

Aus der EP 1 555 332 A1 ist ein Verfahren zur Herstellung eines nanokristallinen austenitischen Stahls bekannt, bei dem die Komponenten des Stahls gemischt und mittels mechanischem Legieren zu einem feinen Pulver verarbeitet werden, wobei das feine Pulver anschließend einer Sinterformung unterworfen wird, beispielsweise durch heißisostatisches Pressen.

Aufgabe der vorliegenden Erfindung ist es, ein Verfahren der eingangs genannten Art zur Herstellung eines Formkörpers bereitzustellen, dessen mechanische Eigenschaften gegenüber insbesondere der gießtechnischen Herstellweise verbessert sind.

Diese Aufgabe wird durch ein Verfahren mit den Merkmalen von Patentanspruch 1 gelöst.

Zur Herstellung des erfindungsgemäßen Formkörpers wird zunächst aus der Schmelze einer Dentallegierung insbesondere unter Schutzgasatmosphäre, zum Beispiel Argon, mittels bekannter Verdüsungstechniken ein Dentallegierungspulver hergestellt. Das Pulver wird einem Heißisostatpressverfahren unterworfen, mit dessen Hilfe es soweit verdichtet werden kann, dass letztlich die theoretische Dichte der Dentallegierung erzielt werden kann. Der so hergestellte Formkörper kann anschließend materialabtragend, insbesondere spanabhebend, bearbeitet werden zur Herstellung eines dentalen Teiles, zum Beispiel eines Zahnersatzteiles, insbesondere einer Krone, Brücke oder eines entsprechenden Gerüstes.

Formkörper aus einem Dentallegierungspulver, das durch heißisostatisches Pressen dichtgesintert wurde, haben ein feines pulvermetallurgisches Gefüge mit gegenüber dem Gussgefüge überraschend deutlich verbesserten mechanischen Eigenschaften. Dies gilt insbesondere für die Zugfestigkeit und das Dehnungsverhalten. Das Gefüge zeichnet sich bei gleicher chemischer Zusammensetzung auch bei großen Abmessungen und großer Masse des Formkörpers durch eine feinglobulare Struktur gegenüber einer grobdendritischen Struktur im Gusszustand aus. Der Vorteil des feinglobularen Gefüges besteht nicht nur in verbesserten mechanischen Eigenschaften, sondern auch in einer Verbesserung spezieller technologischer Eigenschaften, die bei der Herstellung dentaler Teile, insbesondere Zahnersatzteile, erstrebenswert sind: der für das Herausfräsen des dentalen Teiles erforderliche Aufwand wird durch die bessere Zerspanbarkeit reduziert und eine eventuell erforderliche maßliche Feinkorrektur des dentalen Teiles durch den Zahntechniker und/oder Zahnarzt durch Finieren wird durch die höhere Duktilität des erfindungsgemäß hergestellten Formkörpers verbessert.

Neben einer Verbesserung der mechanischen und technologischen Eigenschaften führt die Anwendung des Heißisostatpressverfahrens bei einem Dentallegierungspulver auch zu einer garantierten Poren- und Lunkerfreiheit, die bei gießtechnischen Verfahren und größeren Formkörpern sowie bei sonstigen pulvermetallurgischen Verfahren einen sehr hohen Aufwand erfordern und dennoch nicht vollständig erzielbar sind.

Als weiterer Vorteil ist darauf hinzuweisen, dass im zahntechnischen Labor die für das Gießverfahren an sich bekannten Dentallegierungen verwendet werden können, deren biologische Verträglichkeiten bekannt sind, und dass auch relativ kleine Legierungsmengen wirtschaftlich herstellbar sind.

Vorzugsweise ist das Dentallegierungspulver während des heißisostatischen Pressens in eine gasdichte und gasdicht verschlossene Kapsel eingebracht. Die insbesondere dünnwandige gasdichte Kapsel ist vorzugsweise aus Edelstahl gefertigt und wird gasdicht verschweißt, nachdem das Dentallegierungspulver eingefüllt wurde.

Das Dentallegierungspulver kann beispielsweise eine Schüttdichte von weniger als 5 g/cm³ aufweisen, beispielsweise eine Schüttdichte von 4,8 g/cm³. Die gasdichte Kapsel weist ein Übermaß auf, das die entsprechende Volumenschrumpfung bzw. Materialverdichtung während des heißisostatischen Pressens berücksichtigt. Vorzugsweise ist die Kapsel rohrförmig ausgestaltet, so dass ein dichtgesinterter Rundblock-Formkörper hergestellt werden kann, der nach der Entnahme aus der Kapsel auf Endmaß bearbeitet werden kann, beispielsweise durch Sägen und Überdrehen.

Beim Einbringen in die Kapsel weist das Dentallegierungspulver vorzugsweise eine Korngrößenverteilung <400 Mikrometer, insbesondere <100 Mikrometer auf. Es hat sich gezeigt, dass bei einer derartigen Korngrößenverteilung besonders gute mechanische Eigenschaften des dichtgesinterten Formkörpers erzielt werden können.

Günstig ist es, wenn das Dentallegierungspulver beim Einbringen in die Kapsel eine mittlere Korngröße von 30 bis 50 Mikrometer, insbesondere 40 Mikrometer aufweist.

Es kann vorgesehen sein, dass das Dentallegierungspulver unmittelbar in die gasdichte Kapsel eingefüllt wird, wobei das Einfüllen beispielsweise durch Rütteln unterstützt werden kann. Alternativ kann vorgesehen sein, dass das Dentallegierungspulver vor dem Einbringen in die Kapsel zu einem Pulverpressling vorgepresst wird, so dass ein vorzugsweise kaltisostatisch vorgepresster Pulverpressling in die Kapsel eingesetzt wird. Es kann auch ein auf sonstige pulvermetallurgische Weise aus dem Dentallegierungspulver hergestellter poröser Körper in die gasdichte Kapsel eingebracht und anschließend heißisostatisch verdichtet werden.

Bei einer vorteilhaften Ausführungsform wird der vorgepresste Pulverpressling vor dem Einbringen in die gasdichte Kapsel durch Sinterung vorverdichtet.

Alternativ kann vorgesehen sein, dass das Dentallegierungspulver zunächst vorgepresst und durch Sinterung zu geschlossener Porosität vorverdichtet und anschließend kapselfrei durch heißisostatisches Pressen nachverdichtet wird. Es kann also der vorgepresste Pulverpressling je nach Restporosität entweder kapselfrei oder mit Einkapselung dem Heißisostatpressverfahren unterworfen werden.

Nachfolgend wird die Erfindung anhand eines Ausführungsbeispiels näher erläutert. Um einen Formkörper aus einer CoCr-Dentallegierung mit der chemischen Zusammensetzung Co 60,5%, Cr 28%, W 9%, Si 1,5%, Mn <1%, N <1%, Nb <1% (Massen-Prozent-Angaben) in Zylinderform mit einem Durchmesser von 100 mm und einer Höhe von 16 mm zu erhalten, wird zunächst eine Schmelze der genannten CoCr-Dentallegierung in üblicher Weise hergestellt. Die Legierung wird in einer kommerziellen Pulververdüsungsanlage unter Argon-Schutzgas erschmolzen und anschließend zu einem Dentallegierungspulver verdüst mit einer Korngrößenverteilung < 100 Mikrometer und einer mittleren Körngröße von 40 Mikrometer. Die Schüttdichte dieses Dentallegierungspulvers beträgt 4,8 g/cm³ und damit 56% der theoretischen Dichte.

Für das heißisostatische Pressen wird eine gasdichte Edelstahlkapsel mit einem Übermaß hergestellt, das die entsprechende Volumenschrumpfung bzw. Materialverdichtung während des heißisostatischen Pressens berücksichtigt. Die Kapsel wird beispielsweise rohrförmig hergestellt mit einem Durchmesser von 130 mm und einer Höhe von 1200 mm, wobei Boden, Deckel und Mantel eine Wandstärke von 2 mm aufweisen. In den Deckel ist ein Absaugstutzen eingeschweißt, durch den das Dentallegierungspulver eingefüllt und beim Einfüllen gerüttelt wird, um eine kompakte Füllung zu erreichen. Nach dem Einfüllen des Pulvers wird die Kapsel evakuiert und dann wird der Absaugstutzen gasdicht verschweißt. Die Kapsel wird anschließend in die Druckkammer einer Heißisostatpresse eingesetzt und mit einer Aufheizrate von 20° C/min bis auf eine Temperatur von 600 ° C aufgeheizt. Gleichzeitig wird in der Druckkammer ein Argon-Gasvordruck von 300 bar aufgebaut, der während des Aufheizens auf 650 bar erhöht wird. Die Temperatur von 600° C wird bei konstantem Druck eine Stunde lang aufrechterhalten, anschließend wird mit einer Aufheizrate von 3° C/min weiter aufgeheizt bis auf eine Temperatur von 1150° C, wobei bei Erreichen von 750° C der Gasdruck auf 1000 bar erhöht und konstant gehalten wird bis zum Ablauf einer Haltezeit von 3 Stunden bei 1150° C. Durch das gleichzeitige Aufbringen von hohem allseitigen Gasdruck und hoher Termperatur sintert das Dentallegierungspulver in der gasdichten Kapsel zur theoretischen Dichte zusammen und die Kapsel schrumpft entsprechend. Nach Ablauf der Haltezeit von 3 Stunden bei 1150° C wird die Heizung der Heißisostatpresse abgeschaltet und der Druck in der Druckkammer wird abgebaut. Nachdem der Heißisostatpress-Zyklus beendet ist, kann die Kapsel der Druckkammer entnommen werden, sie ist dabei auf einen Durchmesser 107 mm und eine Länge von circa 1100 mm geschrumpft. Die Formkörper werden dann aus dem verdichteten Rundblock durch Sägen und Überdrehen auf Endmaß gefertigt.

Ein so gebildeter Formkörper zeichnet sich durch die nachfolgend aufgelisteten mechanischen Eigenschaften aus, die gegenüber einem herkömmlichen Gussgefüge deutlich verbessert sind:

| | HIP-Verfahren | Gussverfahren |
|---|---|---|
| Dehngrenze R_{p 0,2}: | 630 MPa | 620 MPa |
| Zugfestigkeit Rₘ: | 1100 MPa | 845 MPa |
| Härte HV 10: | 325 | 280 |
| Bruchdehnung A₅: | 32% | 10,2% |
| Dichte: | 8,6 g/cm³ | 8,6 g/cm³ |

Voranstehend sind in der ersten Spalte die mechanischen Eigenschaften aufgelistet, die bei dem voranstehend erläuterten Formkörper erzielt werden, der aus einem Dentallegierungspulver gefertigt ist, das durch heißisostatisches Pressen (HIP) dichtgesintert wurde. In der zweiten Spalte sind zum Vergleich die entsprechenden mechanischen Eigenschaften eines vergleichbaren Gussgefüges aufgelistet. Bei gleicher chemischer Zusammensetzung zeichnet sich der erfindungsgemäße Formkörper auch bei großen Abmessungen und großer Masse durch deutlich verbesserte mechanische Eigenschaften aus.

## Patentansprüche

1. Verfahren zur Herstellung eines Formkörpers, der aus einer Dentallegierung besteht und materialabtragend bearbeitbar ist zur Herstellung von dentalen Teilen, wobei man ein Dentallegierungspulver durch heißisostatisches Pressen dichtsintert,
**dadurch gekennzeichnet, dass** man das Dentallegierungspulver aus einer Schmelze einer Dentallegierung mittels Verdüsen herstellt.

2. Verfahren nach Anspruch 1, **dadurch gekennzeichnet, dass** das Dentallegierungspulver während des heißisostatischen Pressens in eine gasdichte und gasdicht verschlossene Kapsel eingefüllt ist.

3. Verfahren nach Anspruch 2, **dadurch gekennzeichnet, dass** das Dentallegierungspulver vor dem Einfüllen in die gasdichte Kapsel eine Korngrößenverteilung <400 Mikrometer aufweist.

4. Verfahren nach Anspruch 2 oder 3, **dadurch gekennzeichnet, dass** das Dentallegierungspulver vor dem Einfüllen in die gasdichte Kapsel eine mittlere Korngröße von 30 bis 50 Mikrometer aufweist.

5. Verfahren nach Anspruch 2, 3 oder 4, **dadurch gekennzeichnet, dass** das Dentallegierungspulver vor dem Einfüllen in die gasdichte Kapsel zu einem Pulverpressling vorgepresst wird.

6. Verfahren nach Anspruch 5, **dadurch gekennzeichnet, dass** der vorgepresste Pulverpressling vor dem Einfüllen in die gasdichte Kapsel durch Sinterung vorverdichtet wird.

7. Verfahren nach Anspruch 1, **dadurch gekennzeichnet, dass** das Dentallegierungspulver zunächst vorgepresst und durch Sinterung zu geschlossener Porosität vorverdichtet wird und anschließend kapselfrei durch heißisostatisches Pressen nachverdichtet wird.

## Claims

1. A method for making a molding which consists of a dental alloy and can be worked by removing material to produce dental parts, wherein a dental alloy powder is dense-sintered by hot-isostatic pressing, **characterized in that** the dental alloy powder is produced from a melt of a dental alloy by means of atomizing.

2. The method according to claim 1, **characterized in that**, during the hot-isostatic pressing, the dental alloy powder is filled into a capsule which is gastight or sealed in a gastight manner.

3. The method according to claim 2, **characterized in that**, before it is filled into the gastight capsule, the dental alloy powder has a grain size distribution of < 400 micrometers.

4. The method according to claim 2 or 3, **characterized in that**, before it is filled into the gastight capsule, the dental alloy powder has an average grain size of 30 to 50 micrometers.

5. The method according to claim 2, 3 or 4, **characterized in that**, before it is filled into the gastight capsule, the dental alloy powder is pre-pressed into a powder compact.

6. The method according to claim 5, **characterized in that**, before it is filled into the gastight capsule, the pre-pressed powder compact is pre-compacted by sintering.

7. The method according to claim 1, **characterized in that** the dental alloy powder is first pre-pressed and pre-compacted by sintering to give closed porosity and is subsequently post-compacted without a capsule by hot-isostatic pressing.

## Revendications

1. Procédé de fabrication d'un corps moulé qui est constitué d'un alliage dentaire et peut être travaillé par enlèvement de matière, pour la production d'éléments dentaires, dans lequel une poudre d'alliage dentaire est soumise à un frittage dense par compression isostatique à chaud,
**caractérisé en ce que** la poudre d'alliage dentaire est produite à partir d'une masse fondue d'un alliage dentaire par atomisation.

2. Procédé selon la revendication 1, **caractérisé en ce que** la poudre d'alliage dentaire est chargée pendant la compression isostatique à chaud dans une capsule étanche aux gaz et fermée de façon étanche aux gaz.

3. Procédé selon la revendication 2, **caractérisé en ce que** la poudre d'alliage dentaire présente, avant la charge dans la capsule étanche aux gaz, une répartition granulométrique < 400 microns.

4. Procédé selon la revendication 2 ou 3, **caractérisé en ce que** la poudre d'alliage dentaire présente, avant la charge dans la capsule étanche aux gaz, une granulométrie moyenne de 30 à 50 microns.

5. Procédé selon la revendication 2, 3 ou 4, **caractérisé en ce que** la poudre d'alliage dentaire est précompressée avant la charge dans la capsule étanche aux gaz en un comprimé de poudre.

6. Procédé selon la revendication 5, **caractérisé en ce que** le comprimé de poudre précompressé est précompacté avant la charge dans la capsule étanche aux gaz par frittage.

7. Procédé selon la revendication 1, **caractérisé en ce que** la poudre d'alliage dentaire est tout d'abord précompressée et précompactée par frittage à une porosité fermée et est ensuite postcompactée sans capsule par compression isostatique à chaud.
